# EUROPEAN PATENT SPECIFICATION

(11) **EP 0 852 197 B1**
(45) Date of publication and mention of the grant of the patent: **10.04.2002**
(21) Application number: 97660134.4
(22) Date of filing: 28.11.1997
(51) Int. Cl.: B60S 3/04

(54) **Method of washing vehicles and brushless vehicle wash line**
Verfahren zum Waschen von Fahrzeugen und bürstenlose Waschstrasse für Fahrzeuge
Méthode de lavage de voitures et ligne de lavage sans brosse pour voitures

(30) Priority: 04.12.1996 FI 964858
(43) Date of publication of application: 08.07.1998
(73) Proprietor: Tammermatic Oy, 33300 Tampere (FI)
(72) Inventor: Syvälahti, Esa, 37120 Nokia (FI)
(74) Representative: Huhtanen, Ossi Jaakko

(56) References cited:
- EP-A- 0 738 637
- US-A- 4 679 578
- US-A- 5 090 429

## Description

The invention relates to a method of washing vehicles, in which method a vehicle is conveyed through substantially stationary wash units, the vehicle being prewashed, washed by high-pressure oscillating jets and/or jet units and dried in the wash units.

The invention further relates to a brushless vehicle wash line comprising substantially stationary wash units, means for moving a vehicle via the wash units, the wash units comprising at least one high-pressure wash unit with oscillating nozzles for spraying water onto the surface of the vehicle to be washed.

Washing vehicles in a wash line is known as such. A vehicle wash line comprises of successive substantially stationary wash units via which the vehicle to be washed is arranged to be moved. Typically the wash units are of the shape of a gantry and arranged in succession to allow passage of the vehicle to be washed through each of them in turn. A brushless wash line comprises at least a prewash unit, a high-pressure wash unit and a drying unit. If necessary, the wash line may also comprise other units in a manner known per se. High-pressure washing is most preferably implemented by what are known as oscillating high-pressure nozzles. The nozzles oscillate in a transverse direction to the movement direction of the vehicle to be cleaned in order to be able to clean a sufficiently long area of the surface of the vehicle in the transverse direction. The movement speed of the vehicle to be cleaned past the high-pressure nozzle must naturally be adjusted so as to allow the nozzle jets to overlap when wiping in opposite directions in order not to leave any part of the surface of the vehicle unwashed. This naturally limits the movement speed of the vehicle to be washed. Furthermore it is most preferable to use nozzles providing a jet as point-like as possible, but this in particular renders the movement speed of the vehicle to be washed quite limited resulting in an insufficient wash line capacity.

US 5,255,695 discloses a vehicle washing apparatus through which a vehicle to be washed passes. The vehicle is prewashed and rinsed while it is moving, but the vehicle is stopped for high-pressure washing inside the washing apparatus. This is why there have to be a plurality of successive high-pressure wash nozzles, even though the high-pressure nozzles are oscillated in the longitudinal direction of the vehicle. Since the vehicle is stopped during high-pressure washing, the capacity of the washing apparatus is quite low in spite of several nozzle groups, the maximum being about 30 cars per hour.

It is the object of the present invention to provide a method of washing vehicles and a vehicle wash line for rapid and efficient washing of vehicles.

The method of the invention is characterized in that the high-pressure oscillating jets and/or jet units are disposed in at least two different positions for a given part of the vehicle in the movement direction of the vehicle, and the oscillation of the high-pressure jets and/or jet units disposed in different positions is synchronized in relation to one another and to the movement speed of the vehicle in order for the sweepings of the oscillating jets and/or jet units to be directed at least partially at different points on the surface of the vehicle in the movement direction of the vehicle.

The vehicle wash line of the invention is further characterized in that there are at least two successive high-pressure wash units for a given vehicle part in the movement direction of the vehicle, and that the oscillation of the oscillating nozzles of the first high-pressure wash unit and the second high-pressure wash unit is synchronized in relation to one another and to the movement speed of the vehicle to be washed in order for the sweepings of the oscillating jets of the different high-pressure wash units to be directed at least partially at different points on the surface of the vehicle in the movement direction of the vehicle.

It is an essential idea of the invention that the vehicle is washed in a wash line comprising substantially stationary wash units in relation to which the vehicle is arranged to move, and that the wash line comprises at least two successive oscillating pressure wash nozzle units adapted to wash the same surface of the vehicle, and that the oscillation of the nozzles of the units is synchronized to one another and to the movement speed of the vehicle in order for the successive nozzle units to direct the water jet at least partially at different points in the longitudinal direction of the vehicle. It is the idea of a preferred embodiment that the synchronization of the oscillation of the nozzles is implemented by controlling the oscillation equipment of the different units by a valve so as to make the nozzles of the devices move substantially simultaneously.

It is an advantage of the invention that by arranging high-pressure wash units in succession, the movement speed of the vehicle to be washed can be raised and consequently the wash line capacity is increased. The synchronization ensures that successive wash units do not wash only the same points of the vehicle to be washed and leave some point of the vehicle entirely unwashed. This way the wash line capacity can be raised up to over hundred cars per hour. Furthermore, by using separate high-pressure wash units, the frame size of one high-pressure wash unit does not become excessive. At the same time it is possible to use only one module size which is more inexpensive to make in series production. Furthermore, it is possible to increase the wash line capacity step by step by adding high-pressure wash units afterwards to completely installed wash lines.

The invention will be described in more detail in the attached drawing, in which
Figure 1 schematically shows a brushless vehicle wash line of the invention,
Figure 2a schematically shows the sweeping of one or several adjacent nozzles of a high-pressure unit of the vehicle wash line of the invention,
Figure 2b schematically shows the sweepings of the nozzles of two successive high-pressure units of the vehicle wash line of the invention, and
Figure 3 schematically shows the synchronization coupling of high-pressure units of the vehicle wash line of the invention.

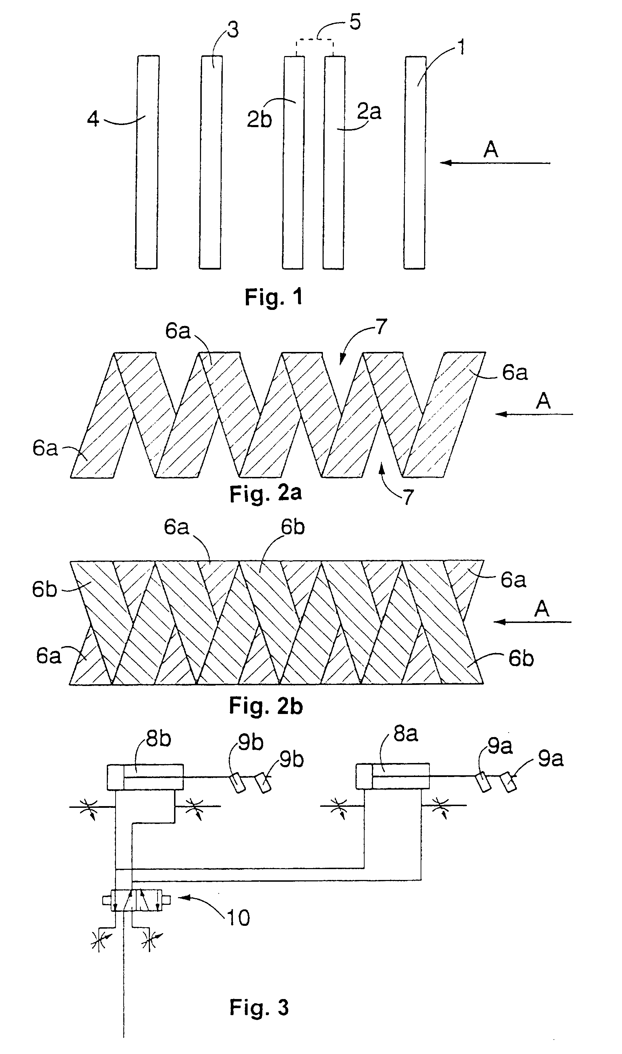

Figure 1 schematically shows a brushless vehicle wash line. The vehicle wash line comprises substantially stationary wash units, in relation to which the vehicle to be washed is moved in accordance with arrow A. Typically the wash units are shaped as a gantry, the vehicle to be washed being moved under said gantries. The means for moving the vehicle and the basic structure of the wash units are fully known per se, and are therefore not described in greater detail herein. In the movement direction of the vehicle to be washed, a prewash unit 1 is arranged first, by means of which the vehicle is subjected to what is known as a prewash. A first high-pressure unit 2a and a second high-pressure wash unit 2b are disposed after the prewash unit 1. The high-pressure wash units 2a and 2b serve to wash the vehicle by high-pressure jets being directed at the vehicle for cleaning it. The wash line may next comprise a rinse unit 3 for rinsing the vehicle and a drying unit 4 for drying the vehicle. The wash line may naturally also comprise other units, fully known per se, but for the sake of clarity they are not described in more detail herein. The number and position of the different units and the distance between them may vary according to the need.

Nozzles producing a high-pressure water jet for washing the vehicle are disposed in the high-pressure wash units 2a and 2b. The nozzles are preferably oscillating point jet nozzles providing a point-like jet with a pressure that is sufficiently high even on the surface of the vehicle. The nozzles are further adapted to oscillate transversely to the movement direction A of the vehicle, whereby they are able to clean a sufficient length of the surface of the vehicle in the longitudinal direction. One high-pressure wash unit may comprise e.g. three adjacent nozzles, adapted to oscillate simultaneously, said simultaneously oscillating nozzles forming a nozzle unit and, similarly, the jets provided by the nozzle unit forming a jet unit. A nozzle unit comprising three adjacent nozzles does not require an excessively large high-pressure wash unit frame structure, but does provide a reasonably wide sweeping. This is why nozzle units comprised of three adjacent nozzles are commonly used in high-pressure wash units, since such high-pressure wash units can be produced in reasonable quantities in series production and consequently inexpensively. The oscillation of the nozzles of the first high-pressure wash unit 2a is synchronized with the oscillation of the nozzles of the second high-pressure wash unit 2b. This synchronization is depicted by a broken line 5 in the attached Figure. Furthermore, the speed of moving the vehicle to be washed and the distance between the nozzles of the first high-pressure wash unit 2a and the nozzles of the second high-pressure wash unit 2b have been accounted for. In this way the sweepings of the nozzles have been arranged at least partially not to be directed at the same point on the surface of the vehicle, the successive high-pressure units 2a and 2b washing at least partly a different point of the surface of the vehicle. The different parts of the vehicle, such as the roof and the sides, may naturally have a dedicated high-pressure wash unit, the roof, for example, having a dedicated first roof nozzle unit and a dedicated second roof nozzle unit, synchronized as described above. Similarly, the sides of the vehicle may have a separate first side nozzle unit and a separate second side nozzle unit, synchronized one with another as described above.

Figure 2a shows the sweeping of one or several adjacent jet nozzles of one high-pressure wash unit. The jet nozzles oscillate transversely to the movement direction A of the vehicle to be washed. In Figures 2a and 2b the transverse movement of the nozzles in relation to the direction of movement of the vehicle to be washed is shown shorter than natural for the sake of clarity. Because of said transverse oscillation and the movement of the vehicle to be washed, said one or several adjacent jet nozzles of one high-pressure wash unit form a zigzag sweep pattern 6a as shown in Figure 2a to the surface of the vehicle. By using one high-pressure wash unit, a sufficiently good washing result would not be achieved with the speed of movement of the vehicle shown in Figure 2a, i.e. the wash line capacity, since the surface of the vehicle comprises skip regions 7 not covered by the sweep pattern 6a.

Figure 2b shows the sweep patterns of the jet nozzles of two successive high-pressure wash units when the synchronization of the invention is used. In accordance with the invention, the jet nozzles of the high-pressure wash units are synchronized such that the sweep pattern 6b of said one or several adjacent jet nozzles of one high-pressure wash unit covers the skip regions 7 remaining after the first sweep pattern 6a on the surface of the vehicle. Figures 2a and 2b show a sweep pattern on the surface of a vehicle at the maximum speed of movement of the vehicle to be washed, i.e. the maximum capacity of the wash line. If the intention were to increase the capacity further, the wash line could be supplemented by a third high-pressure wash unit, the oscillation of whose nozzles would be synchronized with the oscillation of the nozzles of the two previous high-pressure wash units in the above described way. The capacity of the wash line could be similarly increased further step by step.

Figure 3 shows a synchronization coupling diagram of cylinders oscillating jet nozzles. Figure 3 shows a first oscillation cylinder 8a, arranged to oscillate the point jet nozzles 9a of the first high-pressure wash unit 2a. A second oscillation cylinder 8b is similarly arranged to oscillate the point jet nozzles 9b of the second high-pressure wash unit 2b. A controlled valve 10 is arranged to control the oscillation cylinders 8a and 8b. The valve 10 is arranged such that the pistons of the oscillation cylinders 8a and 8b move substantially simultaneously in the same direction under the influence of a control medium, e.g. air. Said coupling could naturally be implemented simply by the pistons of the oscillation cylinders 8a and 8b moving substantially simultaneously in opposite directions. Instead of oscillation cylinders and a valve, other corresponding actuators, known per se and arranged to move synchronized, could be used as means for oscillating the oscillating nozzles.

The drawing and the related description are only intended to illustrate the inventive idea. The details of the invention may vary within the scope of the claims. Consequently, the way the synchronization is implemented is not essential, the most important point being that the sweep patterns of the nozzles of successive high-pressure units washing the same part of the vehicle to be washed are at least partially disposed at a different point on the surface of the vehicle to be washed.

## Claims

1. A method of washing vehicles, in which method a vehicle is conveyed through substantially stationary wash units (1, 2a, 2b, 3, 4) the vehicle being prewashed, washed by high-pressure oscillating jets (2a, 2b) and/or jet units and dried in the wash units (1, 2a, 2b, 3, 4), **characterized in that** the high-pressure oscillating jets (2a, 2b) and/or jet units are disposed in at least two different positions for a given part of the vehicle in the movement direction of the vehicle, and the oscillation of the high-pressure jets (2a, 2b) and/or jet units disposed in different positions is synchronized in relation to one another and to the movement speed of the vehicle in order for the sweepings of the oscillating jets (2a, 2b) and/or jet units to be directed at least partially at different points on the surface of the vehicle said different points being located in the movement direction of the vehicle.

2. A method as claimed in claim 1, **characterized in that** nozzles (9a, 9b) providing a point jet are used to produce the oscillating jets (2a, 2b).

3. A brushless vehicle wash line comprising substantially stationary wash units (1 2a, 2b, 3, 4), means for moving a vehicle via the wash units (1, 2a, 2b, 3, 4) the wash units (1, 2a, 2b, 3, 4) comprising at least one high-pressure wash unit (2a, 2b) with oscillating nozzles for spraying water onto the surface of the vehicle to be washed, **characterized in that** there are at least two successive high-pressure wash units (2a, 2b) for a given vehicle part in the movement direction of the vehicle, and that the oscillation of the oscillating nozzles of the first high-pressure wash unit (2a) and the second high-pressure wash unit (2b) is synchronized in relation to one another and to the movement speed of the vehicle to be washed in order for the sweepings of the oscillating jets of the different high-pressure wash units (2a, 2b) to be directed at least partially at different points on the surface of the vehicle said different points being located in the movement direction of the vehicle.

4. A vehicle wash line as claimed in claim 3, **characterized in that** the oscillating nozzles are point jet nozzles (9a, 9b).

5. A vehicle wash line as claimed in claim 3 or 4, **characterized in that** oscillation cylinders (8a, 8b) are used as means for oscillating the oscillating nozzles, the oscillation cylinders (8a, 8b) being coupled to operate substantially simultaneously by means of a valve (10).

## Patentansprüche

1. Verfahren zum Waschen von Fahrzeugen, wobei bei dem Verfahren ein Fahrzeug durch im wesentlichen stationäre Wascheinheiten (1, 2a, 2b, 3, 4) befördert wird, wobei das Fahrzeug vorgewaschen, durch pendelnde Hochdruckstrahlen und/oder Strahleinheiten gewaschen und in den Wascheinheiten (1, 2a, 2b, 3, 4) getrocknet wird, **dadurch gekennzeichnet, daß** die pendelnden Hochdruckstrahlen (2a, 2b) und/oder Strahleinheiten in mindestens zwei unterschiedlichen Positionen für ein gegebenes Teil des Fahrzeugs in der Bewegungsrichtung des Fahrzeugs angeordnet sind, und das Pendeln der Hochdruckstrahlen (2a, 2b) und/oder Strahleinheiten, die in unterschiedlichen Positionen angeordnet sind, in Bezug zueinander und der Bewegungsgeschwindigkeit des Fahrzeugs synchronisiert sind, damit die überstreichenden Bewegungen der pendelnden Strahlen (2a, 2b) und/oder Strahleinheiten mindestens teilweise auf unterschiedliche Punkte an der Oberfläche des Fahrzeugs gerichtet sind, wobei die unterschiedlichen Punkte in der Bewegungsrichtung des Fahrzeugs positioniert sind.

2. Verfahren gemäß Anspruch 1, **dadurch gekennzeichnet, daß** Düsen (9a, 9b), die einen Punktstrahl liefern, verwendet werden, um die pendelnden Strahlen (2a, 2b) zu erzeugen.

3. Bürstenlose Fahrzeugwaschstraße mit im wesentlichen stationären Wascheinheiten (1, 2a, 2b, 3, 4) und Mitteln zum Bewegen eines Fahrzeugs mittels der Wascheinheiten (1, 2a, 2b, 3, 4), wobei die Wascheinheiten (1, 2a, 2b, 3, 4) mindestens eine Hochdruckwascheinheit (2a, 2b) mit pendelnden Düsen zum Sprühen von Wasser auf die Oberfläche des zu waschenden Fahrzeugs aufweisen, **dadurch gekennzeichnet, daß** es mindestens zwei aufeinanderfolgende Hochdruckwascheinheiten (2a, 2b) für einen gegebenen Fahrzeugteil in der Bewegungsrichtung des Fahrzeugs gibt, und daß das Pendeln der pendelnden Düsen der ersten Hochdruckwascheinheit (2a) und der zweiten Hochdruckwascheinheit (2b) im Verhältnis zueinander und mit der Bewegungsgeschwindigkeit des zu waschenden Fahrzeugs synchronisiert ist, damit die überstreichenden Bewegungen der pendelnden Düsen der unterschiedlichen Hochdruckwascheinheiten (2a, 2b) mindestens teilweise auf unterschiedliche Punkte an der Oberfläche des Fahrzeugs gerichtet sind, wobei die unterschiedlichen Punkte in der Bewegungsrichtung des Fahrzeugs positioniert sind.

4. Fahrzeugwaschstraße gemäß Anspruch 3, **dadurch gekennzeichnet, daß** die pendelnden Düsen Punktstrahldüsen (9a, 9b) sind.

5. Fahrzeugwaschstraße gemäß Anspruch 3 oder 4, **dadurch gekennzeichnet, daß** Pendelzylinder (8a, 8b) als Mittel zum Pendeln der pendelnden Düsen verwendet werden, wobei die Pendelzylinder (8a, 8b) gekoppelt sind, um im wesentlichen gleichzeitig mittels eines Ventils (10) zu arbeiten.

## Revendications

1. Procédé de lavage de véhicules, dans lequel un véhicule est convoyé au travers d'unités de lavage (1, 2a, 2b, 3, 4) sensiblement immobiles, le véhicule étant prélavé, lavé par des jets oscillants à haute pression (2a, 2b) et/ou des unités de jet, et séché dans les unités de lavage (1, 2a, 2b, 3, 4), **caractérisé en ce que** les jets oscillants à haute pression (2a, 2b) et/ou les unités de jet sont disposés dans au moins deux positions différentes pour une partie du véhicule donnée, dans le sens de déplacement du véhicule, et l'oscillation des jets à haute pression (2a, 2b) et/ou des unités de jet disposés dans des positions différentes est synchronisée l'un par rapport à l'autre et par rapport à la vitesse de déplacement du véhicule, dans le but que les balayages des jets oscillants (2a, 2b) et/ou des unités de jet soient dirigés au moins partiellement à des points différents de la surface du véhicule, lesdits points différents étant situés dans le sens de déplacement du véhicule.

2. Procédé selon la revendication 1, **caractérisé en ce que** des buses (9a, 9b) fournissant un jet ponctuel sont utilisées afin de produire les jets oscillants (2a, 2b).

3. Ligne de lavage de véhicule sans brosses comprenant des unités de lavage (1, 2a, 2b, 3, 4) sensiblement immobiles, des moyens pour déplacer un véhicule à travers les unités de lavage (1, 2a, 2b , 3, 4), les unités de lavage (1, 2a, 2b, 3, 4) comprenant au moins une unité de lavage à haute pression (2a, 2b) comportant des buses oscillantes pour projeter de l'eau sur la surface du véhicule à laver, **caractérisée en ce qu'**il y au moins deux unités de lavage à haute pression (2a, 2b) successives pour une partie de véhicule donnée, disposées dans le sens de déplacement du véhicule, et **en ce que** les oscillations des buses oscillantes de la première unité de lavage à haute pression (2a) et de la seconde unité de lavage à haute pression (2b) sont synchronisées les unes par rapport aux autres et par rapport à la vitesse de déplacement du véhicule à laver, dans le but que les balayages des jets oscillants des différentes unités de lavage (2a, 2b) soient dirigés au moins partiellement vers des points différents de la surface du véhicule, lesdits différents points étant disposés dans le sens de déplacement du véhicule.

4. Ligne de lavage de véhicule selon la revendication 3, **caractérisée en ce que** les buses oscillantes sont des buses à jet ponctuel (9a, 9b).

5. Ligne de lavage de véhicule selon la revendication 3 ou 4, **caractérisée en ce que** des vérins oscillants (8a, 8b) sont utilisés en tant que moyens pour entraîner en oscillation les buses d'oscillation, les vérins d'oscillation (8a, 8b) étant couplés afin de fonctionner sensiblement simultanément au moyen d'une vanne (10).
